# EUROPÄISCHE PATENTSCHRIFT

(11) **EP 0 782 496 B1**
(45) Veröffentlichungstag und Bekanntmachung des Hinweises auf die Patenterteilung: **14.11.2001**
(21) Anmeldenummer: 96919628.6
(22) Anmeldetag: 05.06.1996
(51) Int. Cl.: B29C 45/14, H01R 43/24

(54) **VERFAHREN ZUR ELEKTRISCHEN VERBINDUNG ZWEIER ELEKTRISCHER BAUTEILE MITEINANDER**
ELECTRIC INTERCONNECTION PROCESS FOR TWO ELECTRIC COMPONENTS
PROCEDE D'INTERCONNEXION ELECTRIQUE DE DEUX COMPOSANTS ELECTRIQUES

(30) Priorität: 25.07.1995 DE 19527123
(43) Veröffentlichungstag der Anmeldung: 09.07.1997
(73) Patentinhaber: ROBERT BOSCH GMBH, 70442 Stuttgart (DE)
(72) Erfinder: NIESLONY, Markus, D-73084 Salach (DE)
(86) Internationale Anmeldenummer: DE9600983
(87) Internationale Veröffentlichungsnummer: WO9704941

(56) Entgegenhaltungen:
- EP-A- 0 335 051
- EP-A- 0 437 659
- EP-A- 0 580 053

## Beschreibung

### Stand der Technik

Es ist bekannt, elektrische Bauteile oder Geräte miteinander durch flexible elektrische Leiter zu verbinden, um die bestimmungsgemäße Funktion der Geräte ausführen zu können (EP-A1-0 437 659). Dies gilt einerseits für die Stromversorgung der Geräte als auch für die Weiterleitung von Steuerströmen. Insbesondere bei elektrischen Bauteilen und Geräten, die in Kraftfahrzeugen untergebracht sind und dort erhöhten Schüttel- und Schwingungsbeanspruchungen ausgesetzt sind, ist es ein Problem, eine einwandfreie leitende Verbindung zwischen dem Leiter und dem jeweiligen Gerät bleibend herzustellen. Hierzu dienen sehr aufwendige Steckverbindungen, mit denen eine wieder lösbare Verbindung erzeugt werden kann.

### Vorteile der Erfindung

Durch das erfindungsgemäße Verfahren zur elektrischen Verbindung zweier elektrischer Bauteile miteinander wird das Problem der sicheren elektrischen Verbindung dadurch gelöst, daß die elektrischen Leiter mit den elektrischen Anschlüssen des Gerätes verlötet oder verschweißt werden und somit eine nicht lösbare Verbindung entsteht, die auch hohen Beanspruchungen standhält. Dabei können vorteilhaft auch Baugruppen bezüglich ihrer elektrischen Verbindung über elektrische Leiter miteinander vorgefertigt werden und in diesem vorgefertigten Zustand in ihre endgültige Position innerhalb des Kraftfahrzeuges oder z. B. einer Kraftstoffeinspritzpumpe gebracht werden. Dies vereinfacht den Montageaufwand, senkt die Montagekosten und stellt eine sichere elektrisch leitende Verbindung dauerhaft zur Verfügung.

In vorteilhafter Weiterbildung wird die Herstellung der elektrischen Verbindung mittels Löten oder Schweißvorgang montagefreundlich und montagesicher hergestellt. Die gemäß Patentanspruch 1 verdichteten Leiterenden lassen sich nach ihrer Festlegung sicher und einfach über einen Löt- oder Schweißvorgang mit den elektrischen Anschlüssen verbinden.

In vorteilhafter Weise dient zur Vormontage der gemäß Patentanspruch 2 zu umspritzenden Endbereiche der Leiter ein Halterahmen, mit dem die Position der Leiterenden zunächst wieder lösbar vor dem Umspritzen mit Kunststoff festgelegt wird. Nach dieser Festlegung läßt sich in einfacher Weise der Halterahmen mit den darin befindlichen Leitern innerhalb eines Spritzwerkzeuges umspritzen unter Aussparung der zu kontaktierenden Leiterenden. Dabei wird anschließend in vorteilhafter Weise das durch Umspritzung hergestellte Teil mit den Leiterenden dem Löt- oder Schweißvorgang zugeführt und ferner auch mittels Verbindungsmittel in der endgültigen Position mechanisch sicher fixiert.

Für den Gegenstand von Patentanspruch 5 wird in vorteilhafter Weise ein Halterahmen zur Durchführung des obenstehend ausgebildeten Verfahrens bereitgestellt. Durch die Zweiteiligkeit ergibt sich eine sehr leichte Einlegbarkeit und Einformbarkeit der Leiter in die Halterahmen, wobei sich insbesondere vorteilhaft auch eine rechtwinklige Umlenkung der Leiter von deren Leiterenden zu dem weiterführenden Kabelteil herstellen läßt. Vorteilhaft dienen dazu Halteelemente im Halterahmen oder im Halteteil gemäß Patentanspruch 6, die in Form einer Rille ausgebildet sind, deren Querschnitt dem Querschnitt des Leiters angepaßt ist. Es können jedoch auch nur teilweise Begrenzungen vorgesehen sein, die den Vorteil haben, daß bei der nachfolgenden Umspritzung die Leiter noch intensiver mit Kunststoff umschlossen und fixiert werden.

In vorteilhafter Weise werden durch Halteelemente des Halterahmens auch die axialen Lagen der Leiterenden festgelegt. In der Ausgestaltung gemäß Patentanspruch 8 wird sichergestellt, daß das gesamte Volumen des durch die Umspritzung hergestellten Teils bis hin zu den Leitern mit Kunststoff ausgefüllt ist. Für den Abschluß dieses Volumens ist vorteilhaft der gemeinsame Steg gebildet, über den sichergestellt ist, daß die abisolierten Leiterenden von der Umspritzung ausgenommen werden. Der gemeinsame Steg bildet dabei den Abschluß der Spritzform (Spritzwerkzeu). Durch die Verdichtung der Leiterenden, insbesondere wenn die Leiter aus Litze bestehen, läßt sich eine gewünschter Querschnitt herstellen, der mehreckig, vorzugweise aber kreisförmig sein kann. Trotz der durch die Verdichtung bereits gegebenen Steifheit der Leiter bietet dann vorteilhaft die Ausgestaltung gemäß Anspruch 10 noch eine zusätzliche Fixierung der Leiterenden, so daß diese für den Verbindungsvorgang mit den Anschlüssen des elektrischen Bauteils eine gesicherte Position einnehmen. Dabei kann auch gemäß Patentanspruch 11 eine exakte axiale Lage der Leiterenden festgelegt werden, die stirnseitig dann durch die Ausnehmungen des Begrenzungsstegs abgeschlossen sind.

Zur Erleichterung der Montage sind Halterahmen und Halteteil aus Kunststoff gefertigt und gemäß Patentanspruch 12 durch wenigstens ein Filmscharnier miteinander verbunden. Dabei können auch mehrere Halteteile am Halterahmen vorgesehen sein, die an verschiedenen Stellen am Halterahmen mit diesem zusammen die Leiter in ihrer Lage fixieren.

Vorteilhaft können ferner gemäß Patentanspruch 14 Führungsstege zwischen Halteteil bzw. Halterahmen und Begrenzungssteg vorgesehen werden, durch die die Zuführung der elektrischen Anschlüsse des zu verbindenen Bauteils oder Geräts zu den Leiterenden lagegesichert ermöglichen. Damit wird der Verbindungsvorgang in Form von Schweißen oder Löten noch montagefreundlicher und sicherer durchführbar.

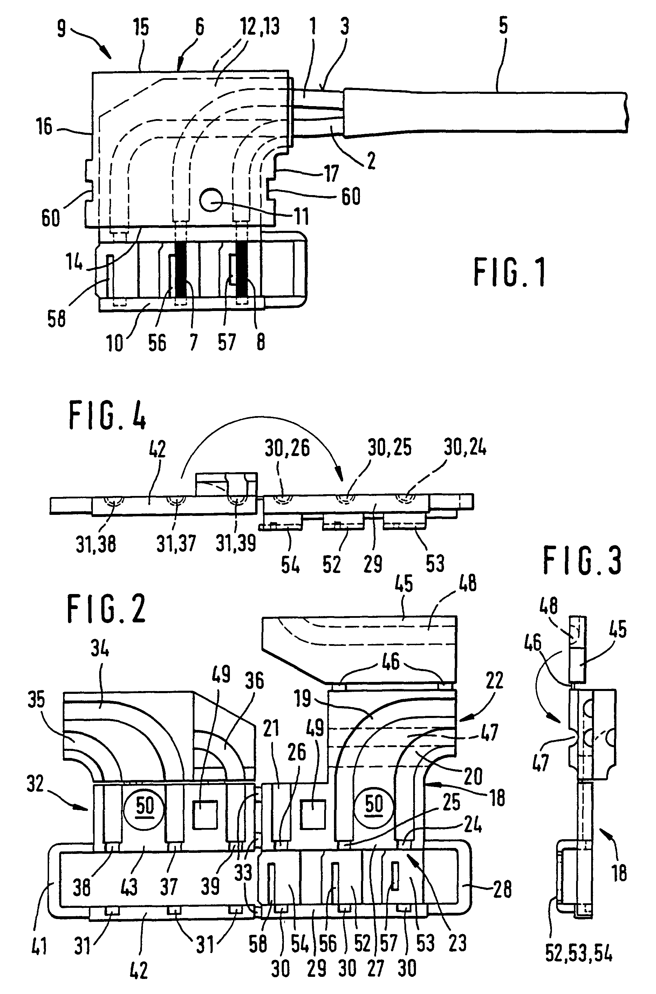

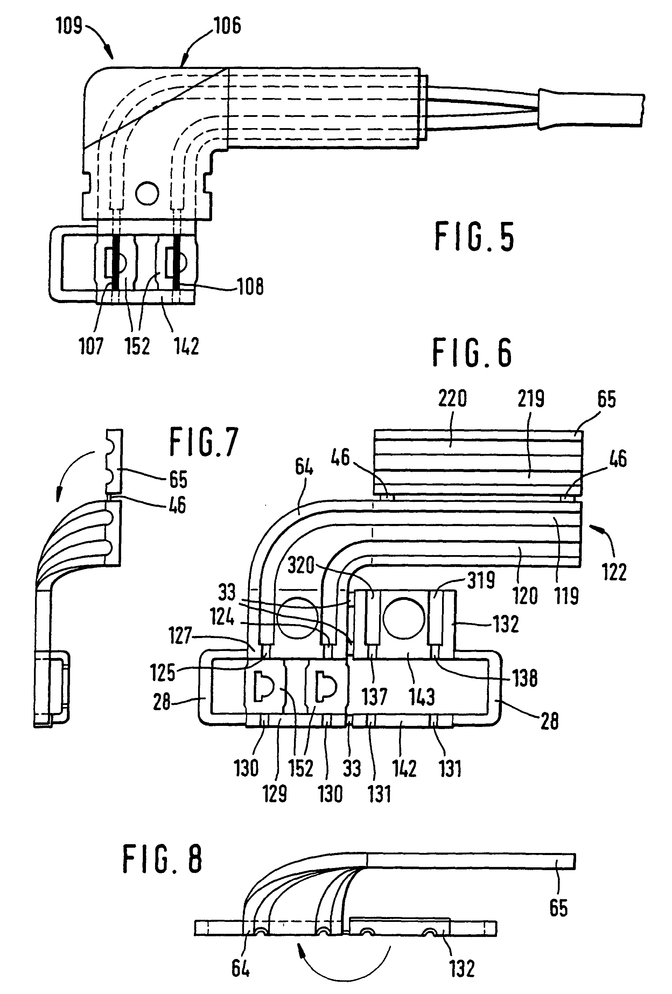

In der Zeichnung sind zwei Ausführungsbeispiele der Erfindung insbesondere bezüglich der Anordnung zur Fixierung der Position von abisolierten Leiterenden dargestellt und werden in der nachfolgenden Beschreibung näher erläutert. Es zeigen Figur 1 eine fertig hergestellte Umspritzung zweier elektrischer Leiter als Anschlußteil zur weiteren Verbindung mit dem elektrischen Bauteil, Figur 2 einen Halterahmen zur ersten Lagefixierung der Leiter zusammen mit über Filmscharniere mit diesem verbundenen Halteteilen bei ausgeklappten Halteteilen in einer Draufsicht, Figur 3 eine um 90° geschwenkte Draufsicht auf die Schmalseite des Halterahmens nach Figur 2, Figur 4 eine um die Längsachse des Halterahmens nach Figur 2 geschwenkte Draufsicht auf eine Schmalseite des Halterahmens, Figur 5 ein zweites Ausführungsbeispiel mit fertig hergestellter Umspritzung der Leiter entsprechend dem Ausführungsbeispiel nach Figur 1, Figur 6 eine zweite Ausführung des Halterahmens, der bei der Ausführung nach Figur 5 Verwendung findet, mit ebenfalls über Filmscharniere mit diesem verbundenen Halteelementen, Figur 7 eine Draufsicht auf die Schmalseite des um seine Hochachse geschwenkten Halterahmens gemäß Figur 6 und Figur 8 eine Draufsicht des um die Querachse geschwenkten Halterahmens gemäß Figur 6.

Beschreibung der Ausführungsbeispiele

In der Figur 1 ist für ein erstes Ausführungsbeispiel die nach der Erfindung hergestellte Positionierung und Fixierung der Leiterenden zweier elektrischer Leiter 1 und 2 dargestellt. Die elektrischen Leiter sind dabei mit einer Isolierung 3 ummantelte Litzen und haben zur weiteren Isolierung und Positionierung eine weitere Ummantelung 5 in der Art von elektrischen Kabeln bekannter Bauart. Die aus der Ummantelung 5 herausgeführten elektrischen Leiter 1 und 2 werden von einer Umspritzung 6 umschlossen, die aus Kunst- bzw. Isolierstoff besteht. Innerhalb dieser Umspritzung, die ein Anschlußteil 9 in Form eines handhabbaren Kunststoffblocks darstellt, verlaufen die einzelnen Leiter in einer vorgesehenen Ausrichtung derart, daß sie innerhalb der Umspritzung bogenförmig verlaufen und die einzelnen Leiter parallel zueinander aus dieser Umspritzung 6 wieder austreten. Außerhalb der Umspritzung weisen die Leiter abisolierte Leiterenden 7 und 8 auf, die in hier nicht näher dargestellter Weise zu einem quadratischen, rechteckigen oder kreisförmigen Querschnitt verdichtet wurden, derart, daß ein Aufspreizen der einzelnen Litzendrähte vermieden wird. Diese Verdichtung kann in bekannter Weise dadurch erfolgen, daß verlötete Litzendrähte unter Einwirkung von Ultraschall aneinander gepreßt werden und somit eine metallische Verbindung miteinander eingehen unter Beibehaltung des gewünschten Querschnitts. Dasselbe kann auch durch Widerstandserwärmung folgen. Vorteilhaft sind dabei die Leiterenden bis innerhalb der Umspritzung hinein auf diese Weise verdichtet mit dem Vorteil, daß der bruchempfindliche Übergang zwischen Verdichtung und normaler Litze keiner mechanischen Verformung mehr ausgesetzt ist aufgrund der Fixierung innerhalb der Umspritzung. Somit sind Schäden, die auf Verformung zurückzuführen wären, mit Sicherheit vermieden.

Die Leiterenden 7 und 8 sind an ihrem äußersten stirnseitigen Ende innerhalb eines Begrenzungssteges 10 festgelegt, so daß ihre Lage in bezug auf die Umspritzung vor willkürlicher Verbiegung gesichert ist und insbesondere auch die Spitzen der Leiterenden stirnseitig vor Beschädigung geschützt sind. Die Kunststoffumspritzung hat dabei die Form eines rechteckigen Blockes mit zwei einander gegenüberliegenden großflächigen, im wesentlichen rechteckigen Seitenteilen 12 und 13 und diese verbindenden Schmalseiten 14, 15, 16 und 17. Von dem Seitenteil 12 führt zum Seitenteil 13 ein quer zu den Leitern verlaufender Durchbruch 11 in Form einer Durchgangsbohrung. Diese dient zur Durchführung z. B. einer Schraube, die der Befestigung der Umspritzung 6 an ihrem Anbringungsort dient. Dieser Anbringungsort kann das elektrisch zu verbindende Bauteil, Steuergerät oder Bauelement sein bzw. deren Gehäuse oder Anbringungsort.

Die Ausgestaltung des Anschlußteils 9 mit den Endbereichen der Leiter 1 und 2, es können auch mehrere sein, wird, wie man der Figur 1 entnimmt, in Form eines Steckers ausgeführt, ohne selbst ein Stecker zu sein. Zur Herstellung dieser fertigen Ausgestaltung wird ein Halterahmen 18 verwendet, der in den Figuren 2 bis 4 näher dargestellt ist. Wie schon dargelegt, haben die Leiter verdichtete Leiterenden. Zur Herstellung des Anschlußteiles werden dabei die aus der Ummantelung 5 austretenden Leiter dabei vor der Verdichtung auf ihre erforderliche Länge abgelängt. Danach werden die Leiter in den Halterahmen 18 eingelegt. Zur Führung der Leiter weist dieser Halterahmen Rillen 19, 20 und 21 als Halteelemente auf, je nach Zahl der einzubringenden Leiter. Diese Rillen durchlaufen nach ihrem Eintritt auf ihrer Eintrittsseite 22 einen 90°-Bogen, so daß sie danach im rechten Winkel zu ihrer Eintrittsrichtung wieder austreten. An ihrer Austrittsseite 23 weisen die Rillen 19 bis 21 Querschnittsverengungen 24 bis 26 auf, mit einem Querschnitt, der dem Profil der verdichteten Leiterenden 7 angepaßt ist. Damit wird eine exakte Führung der Leiterenden an der Austrittsseite gewährleistet und eine exakte Zurordnung mit festgelegtem Abstand zueinander. statt der Rillen können auch zur Führung der Leiter Nöcken vorgesehen sein, was dann eine intensivere Umschließung der Leiter mit Kunstoff ergibt.

Der Bereich, in dem sich die Querschnittsverengungen 24 bis 26 befindet, bildet einen Teil eines abschließenden Steges 27, der zu einer Schmalseite des Halterahmens in einen U-förmigen Bügel 28 übergeht, der seinerseits wieder in einen Begrenzungssteg 29 übergeht, der parallel zum Steg 27 verläuft. In diesem sind auf seiner dem Steg 27 zugewandten Seite Ausnehmungen 30 angeordnet, z.B.in Form einer weitergeführten Rille mit dem Querschnitt der Querschnittsverengungen 24 bis 26. Diese Ausnehmungen liegen in axialer Verlängerung zur Austrittsrichtung der Leiterenden aus den Bereichen der Querschnittsverengungen 24 bis 26. Kompletiert mit entsprechenden Ausnehmungen 31 in einem zweiten Teil des Begrenzungssteges, der sich auf einem Halteteil 32 befindet, bilden diese Ausnehmungen 30, 31 jeweils Sacklöcher, die zur Lagefixierung der äußersten Enden der Leiterenden 7 und 8 dienen und zugleich als Anschlag für die Austrittslänge der Leiterenden 7 und 8. Der Begrenzungssteg kann abweichend von der in der Figur gezeigten Ausführung ausschließlich Teil des Halterahmens sein. Gegebenenfalls sind in diesem Falle die Ausnehmungen 30 sowohl in Achsrichtung der Leiterenden offen als auch auf einer quer dazuliegenden Seite.

Das erwähnte Halteteil 32 ist mittels dreier Filmscharniere 33 zwischen der anderen Schmalseite des Halterahmens und der entsprechenden Schmalseite des Halteteils mit dem Halterahmen verbunden. Mit Hilfe dieser Scharniere kann das Halteteil über den Halterahmen geklappt werden, derart, daß die in Figur 2 sichtbare Fläche abgeschlossen wird. Dieser Vorgang ist in Figur 4 als Ansicht von der oberen Schmalseite des Halterahmens von Figur 2 zu ersehen.

Im Halteteil sind ebenfalls die Halteelmente des Halterahmens ergänzende Halteelemente, z.B. als Rillen 34 bis 36 ausgeführt angeordnet. Sie entsprechen den Rillen 19 bis 21 und bilden bei Überdeckung des Halteteils 32 mit dem Halterahmen 18 Führungskanäle für die elektrischen Leiter derart, daß nach einem Zusammenklappen beider Teile 18 und 32 die elektrischen Leiter innerhalb der Rillen eine gesicherte Position einnehmen. Auch weisen die Rillen 34 bis 36 innerhalb des Halteteils 32 wiederum Querschnittsverengungen 37 bis 39 auf, mit denen die Leiterenden 7 und 8 nach Zusammenklappen von Halterahmen und Halteteil allseitig umschlossen werden und sicher in einer vorgegebenen Position gehalten werden. 'Diese Querschnittsverengungen könne dabei auch als Sicherung der axialen Lage der Leiter im Halteteil dienen. Ferner hat das Halteteil auch einen U-förmigen Bügel 41 und einen Begrenzungssteg 42, der die Ausnehmungen 31 aufweist. Analog zu dem Begrenzungssteg 29 und dem U-förmigen Bügel 28 bei Zusammenklappen von Halteteil 32 und 18 liegen diese Teile deckungsgleich aneinander an. Dabei bildet der Bereich, in dem sich die Querschnittsverengungen 37 bis 39 befinden, wiederum einen Teil eines Steges 43, der zusammen mit dem Steg 27 im zusammengeklappten Zustand der Teile einen gemeinsamen Steg bildet, wie auch die Begrenzungsstege 29 und 42 einen gemeinsamen Begrenzungssteg bilden. Auf diese Weise werden die Leiter und die Leiterenden sowie ihre äußersten Stirnseiten innerhalb der Ausnehmungen 30, 31 sicher in ihrer Position vorfixiert. An dem Halterahmen 18 und dem Halteteil 32 sind ferner hier nicht weiter gezeigte Rastmittel an verschiedenen Stellen vorgesehen, vorzugsweise im peripheren, den Filmscharnieren abgewandten Bereich, um eine Verrastung von Halteteil 32 und Halterahmen 18 miteinander in der zusammengeklappten Position zu ermöglichen, damit anschließend ein Umspritzungsvorgang mit Kunststoff ohne Veränderungen der Lage der Leiter zu ermöglichen. Am Halterahmen 18 oder auch am Halteteil können noch weitere Halteteile angeordnet sein, z. B. der Halteteil 45, der an der oberen Stirnseite des Halterahmens 18 über Filmscharniere 46 mit diesem verbunden ist. Dabei kann dieses Halteteil ebenfalls eine Rille 46 aufweisen, die einer Teilrille 47 auf der Rückseite des Halteteils 18 entspricht und bei Verrastung des Halteteils 45 mit dem Halterahmen 18 auf dieser Seite einen dritten Leiter fixiert, der beispielsweise über die Rille 36 und 21 geführt werden kann und parallel zu den Leiterenden 7 und 8 austreten kann. Dieses wurde jedoch beim Ausführungsbeispiel nach Figur 1 nicht verwirklicht, ist aber optional vorgesehen. In der Figur 3 kann entnommen werden, wie dieses zusätzliche Halteteil 15 zum Halterahmen 18 hin geschwenkt wird.

Der Halterahmen 18 und das Halteteil 32 weist ferner Durchtrittsöffnungen 49 und Durchtrittsbohrungen 50 auf. Die Durchtrittsbohrung 50 ist Teil des Durchbruches 11, der in Figur 1 gezeigt ist, und dient zur Durchführung eines Befestigungsmittels. Die Durchtrittsöffnungen 49 dagegen ermöglichen eine intensive Zufuhr von Kunststoff beim Umspritzungsvorgang von Halteteil und Halterahmen.

Schließlich sind am Halterahmen noch Führungsstege 52 bis 54 vorgesehen, die den gemeinsamen Steg 27, 43 mit dem Begrenzungssteg 29, 42 binden und auf der Längsseite des Halterahmens 18 angeordnet sind, jeweils so, daß sie parallel zu den im Halterahmen 18 eingelegten Leiterenden 7 und 8 verlaufen. Diese Führungsstege weisen wiederum Durchbrüche 56 bis 58 auf, die senkrecht zur Ebene der Seitenteile 12, 13 gesehen neben den Leiterenden 7 und 8 liegen und der geführten Zuführung von Anschlußteilen oder Anschlußblechen des elektrischen Gerätes oder Bauteils dienen. Damit wird sichergestellt, daß diese Anschlüsse des elektrischen Bauteiles oder Gerätes exakt in Anlage an die Leiterenden 7, 8 gelangen, wenn das Anschlußteil 9 an die vorgesehene Stelle zur Herstellung der Verbindung zwischen elektrischem Leiterteil und elektrischen Leitern 1 und 2 positioniert wird. Dann kann mit Hilfe von Widerstandsschweißen oder durch Lötung eine einwandfreie elektrische Verbindung zwischen dem elektrischen Bauteil bzw. Gerät und den Leitern 1 und 2 hergestellt werden, indem deren Leiterenden mit den Anschlüssen verschweißt bzw. verlötet werden.

Zur Herstellung der Umspritzung 6 wird das vorgefertigte Ende der elektrischen Leiter 1 und 2 mit dem Halterahmen 18 und dem Halteteil 32 in eine entsprechende Spritzform eingelegt. Dabei schließt der gemeinsame Steg 27, 43 die eine Seite der Spritzform ab, derart, daß sicher die Leiterenden 7 und 8 von einem nachfolgenden Umspritzungsvorgang ausgeschlossen sind. Eine weitere Abdichtung im Umspritzwerkzeug ist am Eintritt von Leitung 1 und 2. Die Abdichtung erfolgt hier ebenfalls über das Halteteil. Dadurch wird die Beschädigung der Leitungsisolation im Werkzeug vermieden. Die Form der Umspritzung erzeugt ferner in vorteilhafter Weise ein Führungsprofil 60, z. B. in Form einer auf drei Seiten der Umspritzung6 umlaufenden Rille, die man in der Figur 1 lediglich im Bereich der Schmalseiten 16 und 17 sieht. Diese Rille hat ein Pendant am elektrischen Bauteil, Gerät oder Anbringungsort des Anschlußteiles 19 derart, daß das Anschlußteil 19 in einer gesicherten Position mittels eines einzelnen Verbindungselements verbunden werden kann und dabei auch die Anschlüsse durch die Durchbrüche 56 bis 58 zu den Leiterenden hindurchgeführt werden und in dieser Position gehalten werden. Mit Hilfe des Führungsprofils und z. B. einer Befestigungsschraube, die durch den Durchbruch 11 geführt wird, ist der elektrische Anschluß der Leiter 1 und 2 mechanisch ausreichend gesichert, so daß sich Bewegungen, die über die Ummantelung 5 auf die Umspritzung 6 fortpflanzen könnten, sich nicht auf die elektrische Verbindung an den Leiterenden 7 und 8 auswirkt.

Zur Herstellung der elektrischen Verbindung kann es besonders vorteilhaft sein, daß die Leiterenden ein quadratisches oder rechteckiges Profil haben und in breiter Auflage auf ein entsprechendes quadratisches oder rechteckiges Blockprofil der entsprechenden Anschlußelemente des Bauteils gelangen können. Über diese großflächige Verbindung ergibt sich auch vorteilhaft eine sichere Verbindung durch Widerstandsschweißen. Dabei muß gewährleistet sein, daß ein Verdrehen des Profils aus seiner optimalen Lage verhindert wird, da sonst ein einwandfreies gleichmäßiges Verbindungsergebnis gefährdet wird. Die Durchbrüche 56 können vorteilhaft so gelegt werden, daß eine gewisse Verspannung der elektrischen Anschlüsse zu den beiden Enden 7 und 8 hin vor dem Schweißvorgang eingestellt wird.

Die Verbindung des Anschlußteils 9 mit seinem Anbringungsort kann auch durch Nieten oder durch Schnappverbindungsmittel erfolgen. Hier sind alle möglichen Arten von sicheren mechanischen Verbindungsmitteln anwendbar, wobei insbesondere Führungsprofile, die auch anders ausgestaltet werden können wie im gezeigten Ausführungsbeispiel die geometrische Lage des Anschlußteils sichern.

Figur 5 zeigt ein zweites Ausführungsbeispiel der Erfindung mit einem zweipoligen Anschluß von elektrischen Leitern. Hier erkennt man, daß durch einen größer ausgebildeten Halterahmen 64 die elektrischen Leiter auf einer größeren Länge in den Rillen 119 und 120, die den Rillen 19 und 20 von Ausführungsbeispiel 1 entsprechen, gesichert werden können. Dabei ist es auch möglich, eine Führung der elektrischen Leiter nicht nur in einer einzelnen Führungsebene, sondern in einer räumlichen Führung zu verwirklichen. Hierzu weist der Halterahmen 64 ein spezielles Halteteil 65 mit Halbrillen 220 und 219 auf, das ausschließlich den isolierten Teil der elektrischen Leiter auf der Eintrittsseite 122 des Halterahmens 64 sichern. Im dazwischenliegenden Bereich können die Leiter auch nur in der Halbschale der Rillen 120, 119 geführt sein, z. B. im 90°-Umlenkungsbereich und erst dann im Endbereich durch das Halteteil 132 gesichert werden. Dieses weist dann entsprechend Halbrillen 320 und 319 auf, die nach Zusammenklappen von Halterahmen 64 und Halteteil 132 einen Vollkanal für den jeweiligen Leiter bilden. Wie auch im vorigen Ausführungsbeispiel bilden Halteteil 132 und Halterahmen 64 nach dem Zusammenklappen einen gemeinsamen Steg 127, 143, innerhalb dem die Leiterenden 107, 108 mit Hilfe von Querschnittsverengungen 124, 125 am Halteteil 64 bzw. Querschnittsverengungen 137 und 138 am Halteteil 132 geführt werden. Diesem gegenüber liegt dann der zweiteilige Begrenzungssteg 142 und 129 von Halteteil 132 und Halterahmen 64. Statt der bei Figur 2 vorgesehenen Ausnehmungen 30, 31 können im Begrenzungssteg 129, 142 auch ganze Durchtritte für die Leiterenden gebildet werden, obwohl es auch bei diesem Ausführungsbeispiel von Vorteil ist, wenn diese Durchtritte stirnseitig geschlossen sind, die Ausnehmungen 130, 131 also sacklochartige Ausnehmungen zusammen bilden. Auch ist hier wiederum die Führung der Anschlußteile durch Führungsstege 152 vorgesehen analog zum Ausführungsbeispiel nach Figur 2.

Man sieht, daß je nach Lage des Einzelfalles eine spezielle Führung der Leiter möglich ist, die durch einen Halterahmen in Verbindung mit einem oder mehreren Halteteilen vorfixiert wird und eine endgültige Fixierung durch Umspritzung erhält. Auf diese Art und Weise ist es möglich, elektrische Verbindungen zu schaffen, die eine sehr große Kontaktsicherheit haben und somit im rauhen Kraftfahrzeugbetrieb z. B. eine ausreichende Betriebssicherheit gewährleisten. Dabei können die Verbindungsmittel in Form von elektrischen Leitern Kabelbauart mit Litzenseelen in vorteilhafter Weise vorgefertigt werden und dann elektrisch nicht lösbar mit den entsprechenden Komponenten verbunden werden.

## Patentansprüche

1. Verfahren zur elektrischen Verbindung zweier elektrischer Bauteile oder Geräte miteinander mittels flexibler aus mehreren einzelnen Drähten bestehenden elektrischer Leiter (1, 2), **dadurch gekennzeichnet, daß** die Leiter (1,2) auf die erforderliche Länge zugeschnitten, an ihren Enden abisoliert und die so entstandenen Leiterenden (7, 8) verdichtet werden, die Leiter dann zwischen den Bauteilen verlegt und die Leiterenden anschließend durch einen Schweiß- oder Lötvorgang mit entsprechenden elektrischen Anschlüssen des Bauteils oder des Geräts verbunden werden.

2. Verfahren nach Anspruch 1, **dadurch gekennzeichnet, daß** die Leiter mit ihren die Leiterenden (7, 8) aufweisenden Endbereichen in eine vorbestimmte Position zueinander gebracht werden, die deren Zuordnung zu den Anschlüssen für den Löt- oder Schweißvorgang entspricht und unter Aussparung der Leiterenden durch eine Umspritzung mit Kunststoff (6, 106) in dieser Position fixiert werden.

3. Verfahren nach Anspruch 2, **dadurch gekennzeichnet, daß** die Endbereiche der Leiter zur Festlegung der vorbestimmten Position in einen mit Lagefixierungsmitteln versehenen Halterahmen (18, 64) eingelegt werden und in diesem durch wenigstens ein zusätzliches mit dem Halterahmen verrastbares Halteteil (32, 132) fixiert werden, welcher Halterahmen und Halteteil zur endgültigen Fixierung der Lage der Leiterenden anschließend in einem Spritzwerkzeug, das die Leiterenden ausspart, mit Kunststoff umspritzt (6, 106), werden.

4. Verfahren nach Anspruch2 bis 3, **dadurch gekennzeichnet, daß** die in der Umspritzung festgelegten Leiterenden (7, 8) anschließend in Kontaktierungsposition mit den elektrischen Anschlüssen am elektrischen Bauteil oder Gerät gebracht werden und dort durch einen Löt- oder Schweißvorgang eine dauerfeste elektrische Verbindung mit den Anschlüssen hergestellt wird, wobei ferner die Umspritzung durch Verbindungsmittel am elektrischen Bauteil oder Gerät oder deren Aufnahme befestigt wird.

5. Anordnung zur Fixierung der Position von abisolierten Leiterenden (7, 8) elektischer Leiter (1, 2), welche Leiterenden (7, 8) insbesondere zur Herstellung einer elektrischen Verbindung mit elektrischen Anschlüssen mit diesen verlötet oder verschweißt werden, zur Durchführung des Verfahrens nach einen der Ansprüche 2 bis 4, **dadurch gekennzeichnet, daß** zu einer ersten Lagefixierung der Leiter (1, 2) zu einander ein Halterahmen (18, 64) vorgesehen ist, der mit die die Leiterenden (7, 8) aufweisenden Endbereiche der elektrischen Leiter (1, 2) an einem ersten Teilbereich ihrer Umfangsseiten festlegenden Halteelementen (19, 20, 21; 119, 120) versehen ist und mit dem wenigstens einem die Leiter an einem zweiten Teilbereich (34, 35, 36; 319, 320) ihrer Umfangsseiten festlegenden Halteteil (32, 132) verrastbar ist, wobei der Halterahmen (18, 64) und das Halteteil (32, 132) zu einer endgültigen gesicherten Lagefixierung der Leiterenden (7, 8) mit einer Umspritzung (6, 106) aus Kunststoff, die die Leiterenden (7,8) selbst ausspart, versehen ist.

6. Anordnung nach Anspruch 5, **dadurch gekennzeichnet, daß** die Halteelemente im Halterahmen und/oder im Halteteil in der Form einer Rille (19, 20, 21; 119, 120; 34, 35, 36; 319, 320) ausgebildet sind, deren Querschnitt vorzugsweise dem Querschnitt des Leiters (1,2) angepaßt ist.

7. Anordnung nach Anspruch 5 oder 6, **dadurch gekennzeichnet, daß** wenigstens der Halterahmen (18, 64) zusätzliche Halteelemente (24, 25, 26; 37, 38, 39; 124, 125; 137, 138; 30, 31; 130, 131) aufweist, mit denen die axiale Lage der Enden der Leiterenden (7,8) festgelegt wird.

8. Anordnung nach Anspruch 5 bis 7, **dadurch gekennzeichnet, daß** der Halterahmen wenigstens einen Durchbruch (49) aufweist, über die beim Umspritzen Kunststoff direkt an die Leiter (1,2) gelangen kann.

9. Anordnung nach Anspruch 6 bis 8, **dadurch gekennzeichnet, daß** der Halterahmen (18, 64) und das Halteteil (32, 132) einen nur die Leiterenden (7,8) an gemeinsam gebildeten Durchtritten (24, 25 26, 37, 38, 39) hindurchlassenden gemeinsamen Steg ( 29, 42) bilden.

10. Anordnung nach Anspruch 9, **dadurch gekennzeichnet, daß** dem gemeinsamen Steg (29, 42) gegenüber ein mit dem Halterahmen (18, 64) und/oder mit dem Halteteil (32, 132) verbundener Begrenzungssteg (29, 42; 129, 142) vorgesehen ist, der Ausnehmungen (30, 31; 130, 131) zur Fixierung der Leiterenden (7,8) aufweist.

11. Anordnung nach Anspruch 10, **dadurch gekennzeichnet, daß** durch die Ausnehmungen (30, 31; 130, 131) am Begrenzungssteg (29, 42; 129, 142) zusätzlich die axiale Lage der Leiterenden (7,8) festgelegt wird.

12. Anordnung nach einem der vorstehenden Ansprüche 5 bis 11, **dadurch gekennzeichnet, daß** der Halterahmen (18, 64) und das Halteteil (32, 132) aus Kunststoff gefertigt sind und das Halteteil (32, 132) über wenigstens ein Filmscharnier (33, 46) mit dem Halterahmen (18, 64) verbunden ist und Rastelemente zur gegenseitigen Verrastung vorgesehen sind.

13. Anordnung nach Anspruch 10 , **dadurch gekennzeichnet, daß** der gemeinsame Steg (27, 43, 127, 143) mit dem Begrenzungssteg (29, 42; 129, 142) über einen U-förmigen Bügel (28) verbunden ist, der die Distanz der Stege ( 27, 43, 127, 143, 29, 42; 129, 142) von einander und damit die freie zur Verbindung zur Verfügung stehende Länge der Leiterenden (7, 8) bestimmt.

14. Anordnung nach Anspruch 10 oder 11, **dadurch gekennzeichnet, daß** zusätzlich zwischen Halterahmen (18, 64) oder Halteteil (32, 132) und Begrenzungssteg (29, 42; 129, 142) einem jeden Leiterende (7, 8) zugeordnet Führungsstege (52, 53, 54; 152) vorgesehen sind, die Durchtrittsöffnungen (56, 57, 58) aufweisen, durch die quer zu den Leiterenden (7, 8) die elektrischen Anschlüsse in ihre Endlage zu deren Verbindung mit den Leiterenden hindurch geführt werden können.

15. Anordnung nach Anspruch 5, **dadurch gekennzeichnet, daß** die Umspritzung (6, 106) Führungsprofile (60) zur Ausrichtung und Lagesicherung der Umspritzung (6, 106) an dem elektrischen Bauteil oder Gerät oder deren Aufnahme aufweist.

16. Anordnung nach Anspruch 15, **dadurch gekennzeichnet, daß** die Umspritzung (6, 106) einen Durchbruch (11, 50) zur Durchführung eines Befestigungsmittels aufweist, mit dem die Umspritzung in der Endposition am elektrischen Bauteil oder Gerät oder deren Aufnahme fixierbar ist.

17. Anordnung nach Anspruch 15 oder 16, **dadurch gekennzeichnet, daß** die Führungsprofile (60) aus einer die Umspritzung an drei ihre Seiten umlaufenden Rille bestehen, die in einer sich quer zur Längsrichtung der aus der Umspritzung austretenden Leiterenden (7, 8) erstreckenden Ebene liegt.

## Claims

1. Process for the electrical interconnection of two electrical components or devices by means of flexible electrical conductors (1, 2) comprising a plurality of individual wires, **characterized in that** the conductors (1, 2) are cut to the required length, stripped at their ends and the conductor ends (7, 8) produced in this way are sealed, the conductors are then laid between the components and the conductor ends are subsequently connected to corresponding electrical terminals of the component or of the device by a welding or soldering operation.

2. Process according to Claim 1, **characterized in that** the conductors are brought with their end regions, having the conductor ends (7, 8), into a predetermined position in relation to each other which corresponds to their assignment to the terminals for the soldering or welding operation and are fixed in this position by encapsulation in plastic (6, 106) with the exclusion of the conductor ends.

3. Process according to Claim 2, **characterized in that**, for fixing the predetermined position, the end regions of the conductors are placed in a holding frame (18, 64) provided with position-fixing means and are fixed in this frame by at least one additional holding part (32, 132) which can be locked to the holding frame, which holding frame and holding part are subsequently encapsulated in plastic (6, 106) in an injection mould, which excludes the conductor ends, for the final fixing of the position of the conductor ends.

4. Process according to Claim 2 or 3, **characterized in that** the conductor ends (7, 8) fixed in the encapsulation are subsequently brought into contacting position with the electrical terminals on the electrical component or device and a durable electrical connection with the terminals is established there by a soldering or welding operation, the encapsulation further being secured by connecting means on the electrical component or device or the receptacle thereof.

5. Arrangement for fixing the position of stripped conductor ends (7, 8) of electrical conductors (1, 2), which conductor ends (7, 8) are soldered or welded to electrical terminals, in particular for establishing an electrical connection with the latter, for carrying out the process according to one of Claims 2 to 4, **characterized in that**, for a first positional fixing of the conductors (1, 2) in relation to each other, a holding frame (18, 64) is provided, which is provided with holding elements (19, 20, 21; 119, 120) fixing the end regions of the electrical conductors (1, 2), having the conductor ends (7, 8), on a first partial region of their circumferential sides, and can be locked to the at least one holding part (32, 132) fixing the conductors on a second partial region (34, 35, 36; 319, 320) of their circumferential sides, the holding frame (18, 64) and the holding part (32, 132) being provided with an encapsulation (6, 106) of plastic, which excludes the conductor ends (7, 8) themselves, for a final secured positional fixing of the conductor ends (7, 8).

6. Arrangement according to Claim 5, **characterized in that** the holding elements in the holding frame and/or in the holding part take the form of a groove (19, 20, 21; 119, 120; 34, 35, 36; 319, 320), the cross section of which is preferably adapted to the cross section of the conductor (1, 2).

7. Arrangement according to Claim 5 or 6, **characterized in that** at least the holding frame (18, 64) has additional holding elements (24, 25, 26; 37, 38, 39; 124, 125; 137, 138; 30, 31; 130, 131), with which the axial position of the ends of the conductor ends (7, 8) is fixed.

8. Arrangement according to Claims 5 to 7, **characterized in that** the holding frame has at least one clearance (49), via which plastic can directly reach the conductors (1, 2) during the encapsulation.

9. Arrangement according to Claims 6 to 8, **characterized in that** the holding frame (18, 64) and the holding part (32, 132) form a common web (29, 42), allowing through only the conductor ends (7, 8) at jointly formed passages (24, 25, 26, 37, 38, 39).

10. Arrangement according to Claim 9, **characterized in that** opposite the common web (29, 42) a delimiting web (29, 42; 129, 142) is provided, which is connected to the holding frame (18, 64) and/or to the holding part (32, 132) and has recesses (30, 31; 130, 131) for the fixing of the conductor ends (7, 8).

11. Arrangement according to Claim 10, **characterized in that** the axial position of the conductor ends (7, 8) is additionally fixed by the recesses (30, 31; 130, 131) on the delimiting web (29, 42; 129, 142).

12. Arrangement according to one of the preceding Claims 5 to 11, **characterized in that** the holding frame (18, 64) and the holding part (32, 132) are produced from plastic and the holding part (32, 132) is connected to the holding frame (18, 64) via at least one film hinge (33, 46), and snap-in elements are provided for locking them to each other.

13. Arrangement according to Claim 10, **characterized in that** the common web (27, 43, 127, 143) is connected to the delimiting web (29, 42; 129, 142) via a U-shaped clip (28), which determines the distance of the webs (27, 43, 127, 143, 29, 42; 129, 142) from each other and consequently the free length of the conductor ends (7, 8) available for the connection.

14. Arrangement according to Claim 10 or 11, **characterized in that**, between the holding frame (18, 64) or holding part (32, 132) and the delimiting web (29, 42; 129, 142), guiding webs (52, 53, 54; 152) are additionally provided, assigned to each conductor end (7, 8) and having through-openings (56, 57, 58), through which the electrical terminals can be led, transversely with respect to the conductor ends (7, 8), into their final position for their connection to the conductor ends.

15. Arrangement according to Claim 5, **characterized in that** the encapsulation (6, 106) has guiding profiles (60) for the alignment and positional securement of the encapsulation (6, 106) on the electrical component or device or the receptacle thereof.

16. Arrangement according to Claim 15, **characterized in that** the encapsulation (6, 106) has a clearance (11, 50) for the leading-through of a fastening means, by which the encapsulation can be fixed in the final position on the electrical component or device or the receptacle thereof.

17. Arrangement according to Claim 15 or 16, **characterized in that** the guiding profiles (60) comprise a groove which runs around the encapsulation on three of its sides and lies in a plane extending transversely with respect to the longitudinal direction of the conductor ends (7, 8) emerging from the encapsulation.

## Revendications

1. Procédé de connexion électrique de deux composants électriques ou appareils à l'aide de conducteurs électriques souples (1, 2) formés de plusieurs fils séparés,
**caractérisé en ce qu'**
on coupe des longueurs nécessaires de conducteurs (1, 2), on dénude leurs extrémités et on comprime les extrémités de conducteurs (7, 8) ainsi obtenues,
on place les conducteurs entre les composants et on relie les extrémités des conducteurs par une soudure ou une brasure aux branchements électriques correspondants du composant ou de l'appareil.

2. Procédé selon la revendication 1,
**caractérisé en ce qu'**
on place les conducteurs avec leurs zones d'extrémité comportant les extrémités de conducteurs (7, 8) dans une position prédéfinie, réciproque, qui correspond à leur disposition par rapport aux branchements pour l'opération de brasage ou de soudage et en dégageant les extrémités des conducteurs, on les enrobe par injection avec de la matière plastique (6, 106) pour les fixer dans cette position.

3. Procédé selon la revendication 2,
**caractérisé en ce que**
pour fixer la position prédéfinie, on place les zones d'extrémité des conducteurs dans un châssis de fixation (18, 64) muni de moyens de fixation de position, et on les y bloque par au moins une pièce de fixation (32, 132) complémentaire qui peut s'accrocher au châssis,
ce châssis de fixation et la pièce de fixation étant ensuite enrobés de matière plastique (6, 106) laissant dégagées les extrémités des conducteurs, pour le blocage définitif de la position des extrémités des conducteurs.

4. Procédé selon la revendication 2 ou 3,
**caractérisé en ce que**
les extrémités de conducteurs (7, 8) fixées par enrobage par injection sont ensuite placées en position de contact avec les branchements électriques de la pièce ou de l'appareil électrique pour réaliser une liaison électrique définitive par soudage ou brasure avec les branchements, et en outre on fixe l'enrobage par injection par des moyens de liaison sur le composant ou l'appareil électrique ou leur logement.

5. Dispositif de blocage de la position d'extrémités dénudées (7, 8) de conducteurs électriques (1, 2),
ces extrémités de conducteurs (7, 8) étant soudées ou brasées à des branchements électriques pour réaliser une liaison électrique, pour la mise en oeuvre du procédé selon l'une quelconque des revendications 2 à 4,
**caractérisé en ce que**
pour une première fixation en position des conducteurs (1, 2) l'un par rapport à l'autre, il est prévu un châssis de fixation (18, 64) muni d'éléments de fixation (19, 20, 21 ; 119, 120) fixant les zones d'extrémité des conducteurs électriques (1, 2) ayant les extrémités de conducteurs (7, 8), sur une première zone partielle de leurs faces périphériques, et qui peut s'accrocher avec au moins une pièce de fixation (32, 132) fixant les conducteurs sur une seconde zone partielle (34, 35, 36 ; 319, 320) de leurs faces périphériques,
le châssis de fixation (18, 64) et la pièce de fixation (32, 132) étant munis pour une fixation en position garantie de manière définitive des extrémités de conducteurs (7, 8), d'un enrobage injecté (6, 106) en matière plastique, qui dégage les extrémités de conducteurs (7, 8).

6. Dispositif de blocage selon la revendication 5,
**caractérisé en ce que**
les éléments de fixation sont réalisés dans le châssis de fixation et/ou dans la pièce de fixation sous la forme d'une rainure (19, 20, 21 ; 119, 120 ; 34, 35, 36 ; 319, 320) dont la section est de préférence adaptée à celle du conducteur (1, 2).

7. Dispositif selon la revendication 5 ou 6,
**caractérisé en ce qu'**
au moins le châssis de fixation (18, 64) comporte des éléments de fixation supplémentaires (24, 25, 26 ; 37, 38, 39 ; 124, 125 ; 137, 138 ; 30, 31 ; 130, 131), à l'aide desquels on fixe la position axiale des extrémités de conducteurs (7, 8).

8. Dispositif selon l'une quelconque des revendications 5 à 7,
**caractérisé en ce que**
le châssis de fixation comporte au moins un passage (49) par lequel lors de l'injection, la matière plastique arrive directement sur les conducteurs (1, 2).

9. Dispositif selon l'une quelconque des revendications 6 à 8,
**caractérisé en ce que**
le châssis de fixation (18, 64) et la pièce de fixation (32, 132) comportent une entretoise commune (29, 42) qui ne laisse passer que les extrémités de conducteurs (7, 8) à des passages formés en commun (24, 25, 26, 37, 38, 39).

10. Dispositif selon la revendication 9,
**caractérisé en ce que**
l'entretoise commune (29, 42) comporte une entretoise de liaison (29, 42 ; 129, 142) reliée au châssis de fixation (18, 64) et/ou à la pièce de fixation (32, 132), cette entretoise de limitation comportant des cavités (30, 31 ; 130, 131) pour fixer les extrémités de conducteurs (7, 8).

11. Dispositif selon la revendication 10,
**caractérisé en ce que**
les cavités (30, 31 ; 130, 131) de l'entretoise de limitation (29, 42 ; 129, 142) fixent en outre la position axiale des extrémités de conducteurs (7, 8).

12. Dispositif selon l'une quelconque des revendications précédentes 5 à 11,
**caractérisé en ce que**
le châssis de fixation (18, 64) et la pièce de fixation (32, 132) sont fabriqués en matière plastique et la pièce de fixation (32, 132) est reliée par au moins un film formant charnière (33, 46) au châssis de fixation (18, 64) et des éléments d'encliquetage sont prévus pour l'encliquetage réciproque.

13. Dispositif selon la revendication 10,
**caractérisé en ce que**
l'entretoise commune (27, 43, 127, 143) est reliée à l'entretoise de limitation (29, 42 ; 129, 142) par un étrier (28) en forme de U qui définit la distance des entretoises (27, 43, 127, 143, 29, 42 ; 129, 142), l'une par rapport à l'autre et ainsi la longueur libre des extrémités de conducteurs (7,8) disponible pour la liaison.

14. Dispositif selon la revendication 10 ou 11,
**caractérisé en ce qu'**
en plus, entre les châssis de fixation (18, 64) ou la pièce de fixation (32, 132) et l'entretoise de limitation (29, 42 ; 129, 142), il y a des entretoises de guidage (52, 53, 54 ; 152) associées à chaque extrémité de conducteurs (7, 8), ces entretoises ayant des orifices de passage (56, 57, 58) à travers lesquels peuvent passer les branchements électriques transversalement aux extrémités de conducteurs (7, 8), pour pouvoir dans leur position de fin de course être reliés aux extrémités de conducteurs.

15. Dispositif selon la revendication 5,
**caractérisé en ce que**
l'enrobage par injection (6, 106) comporte des profilés de guidage (60) pour l'alignement et la fixation en position de l'enrobage (6, 106) sur le composant ou l'appareil électrique ou son logement.

16. Dispositif selon la revendication 15,
**caractérisé en ce que**
l'enrobage par injection (6, 106) comporte un passage (11, 50) pour la traversée d'un moyen de fixation à l'aide duquel on fixe l'enrobage par injection dans la position définitive sur le composant ou l'appareil électrique ou son logement.

17. Dispositif selon la revendication 15 ou 16,
**caractérisé en ce que**
le profilé de guidage (60) est formé d'une rainure périphérique entourant sur trois de ses côtés la partie d'enrobage injectée, cette rainure s'étendant dans un plan transversal à la direction longitudinale des extrémités de conducteurs (7, 8) sortant de l'enrobage injecté.
